## Europäisches Patentamt

## European Patent Office

## Office européen des brevets

(19)

(11) Veröffentlichungsnummer: **0 003 224**
**B1**

(12) # EUROPÄISCHE PATENTSCHRIFT

(45) Veröffentlichungstag der Patentschrift:
23.02.83

(51) Int. Cl.³: **G 05 D 11/13, B 05 B 7/26**

(21) Anmeldenummer: **78101660.5**

(22) Anmeldetag: **13.12.78**

(54) **Vorrichtung zum Dosieren mindestens einer Komponente einer Mischflüssigkeit.**

(30) Priorität: **24.12.77 DE 2758096**

(43) Veröffentlichungstag der Anmeldung:
**08.08.79 Patentblatt 79/16**

(45) Bekanntmachung des Hinweises auf die Patenterteilung:
**23.02.83 Patentblatt 83/8**

(84) Benannte Vertragsstaaten:
**BE FR GB IT NL SE**

(73) Patentinhaber: **Behr, Hans, Lenzhalde 82,
D-7000 Stuttgart 1 (DE)**

(72) Erfinder: **Vetter, Kurt, Dipl.-Ing., Rechbergweg 24,
D-7148 Remseck 3 (DE)**
Erfinder: **Schweiker, Werner, Fasanenweg 8,
D-7121 Gemmrigheim (DE)**

(74) Vertreter: **Bartels, Hans et al, Patentanwälte Bartels,
Held, Wolff Lange Strasse 51, D-7000 Stuttgart 1 (DE)**

(56) Entgegenhaltungen:
**DE-A-2 157 331**
**DE-A-2 456 012**
**DE-B-2 700 875**
**FR-A-2 257 943**
**US-A-4 019 653**

**INSTRUMENTS AND CONTROL SYSTEMS. Band 45,
Nr. 4, April 1972, Radnor, PA, G. SHINSKEY "Blending
system startup and sheetdown", Seite 9**
**INSTRUMENTATION IN THE CHEMICAL AND PETRO-
LEUM INDUSTRIES, Band 3, 1967, New York, USA, J. E.
GRADER "Fluids blending by special purpose analog
computer", Seiten 17–32**
**MEASUREMENT AND CONTROL, Band 10, Nr. 12, Dezember 1977, London, GB, J. J. JISKOOT "Additive injection and flow ratio control systems", Seiten 455–459**

Vorrichtung zum Dosieren mindestens einer Komponente einer Mischflüssigkeit

Es ist bekannt ein Verfahren zum automatischen Dosieren mindestens einer flüssigen Komponente einer Mischflüssigkeit, insbesondere des Härters eines 2K-Lackes mit Stammlack, bei dem der Durchfluss der druckbeförderten Hauptkomponente (Stammlack) gemessen und der Durchfluss der zu dosierenden druckbeförderten Nebenkomponente (Härter) entsprechend dem festgelegten Mengenverhältnis der beiden zu mischenden Komponenten gesteuert und ausserdem geregelt wird. Die Erfindung betrifft eine Vorrichtung zum Durchführen eines solchen Verfahrens, mit je einem die Haupt- bzw. Nebenkomponente enthaltenden Druckgefäss; mit einem analogen Messwandler, der eine dem Durchfluss der Hauptkomponente verhältnisgleiche elektrische Grösse erzeugt; mit einer Zahnradpumpe zum Fördern der Nebenkomponente auf einer Regelstrecke; mit einer elektrischen Maschine, die als Motor betreibbar ist und die Zahnradpumpe antreibt, welche mit der elektrischen Maschine ein Stellglied bildet; mit einem elektronischen Vierquadrantenregler für die elektrische Maschine; mit einem digitalen Potentiometer zum Einstellen des Mengenverhältnisses der Haupt- zur Nebenkomponente; und mit einer elektrischen Anordnung, bei welcher der Messwandler an einen Regler angeschlossen ist und die elektrische Maschine für die Nebenkomponente sowie der Regler dafür in einem elektrischen Regelkreis angeordnet sind.

Eine Vorrichtung dieser Gattung, bei welcher die Zahnradpumpe wechselweise zum Drosseln der Nebenkomponente dient und dazu die elektrische Maschine als die Pumpe bremsender Generator betreibbar ist, und ein mit ihr durchführbares Verfahren der eingangs genannten Art sind aus Oberfläche 1976, Heft 6, Seiten 342 bis 344, und aus JOT, Juni 1976, Seiten 19 bis 21, bekannt. Danach wird zur «Regelung» der Menge der Hauptkomponente ein «Stellglied» benutzt, das aus dem Druckgefäss für die Hauptkomponente und der Drossel in einer Spritzpistole bestehen soll, die zum Zerstäuben der Mischflüssigkeit mittels Druckluft an die Vorrichtung angeschlossen ist. Offensichtlich handelt es sich dabei nicht um die Regelung des Durchflusses der Hauptkomponente mittels eines Reglers auf einer Regelstrecke, sondern lediglich um die Steuerung des Durchflusses der Hauptkomponente mittels eines Steuergliedes auf einer Steuerstrecke, worauf auch die Verwendung der Bezeichnung «Steuerkette» schliessen lässt.

Die bekannte Vorrichtung weist zwei kontinuierlich arbeitende Messzellen unbekannter Bauart auf, von denen eine den Messwandler darstellt und die andere in dem Regelkreis für die Nebenkomponente stromabwärts hinter dem Stellglied für die Nebenkomponente angeordnet ist und dem Regler für die Nebenkomponente die Regelgrösse (Istwert) des Durchflusses der Nebenkomponente zuführt, während der Messwandler in Verbindung mit dem Potentiometer zum Einstellen des Mengenverhältnisses von Haupt- und Nebenkomponente dem Regler für die Nebenkomponente einen dem gemessenen Durchfluss der Hauptkomponente proportionalen Sollwert des Druchflusses der Nebenkomponente zuführt.

Hinsichtlich der genauen Einhaltung des festgelegten Mengenverhältnisses der beiden zu mischenden Komponenten bringt die kombinierte Steuerung und Regelung des Durchflusses der Nebenkomponente zwar ein besseres Ergebnis als die reine Steuerung des Durchflusses der Nebenkomponente mit Hilfe des gemessenen Durchflusses der Hauptkomponente. Es ist jedoch festzustellen, dass mögliche Druckschwankungen im Druckgefäss für die Hauptkomponente sowie im Streckenabschnitt zwischen dem Stellglied für die Nebenkomponente und der Messzelle für die Nebenkomponente die Genauigkeit der Dosierung der Nebenkomponente indirekt bzw. direkt negativ beeinflussen. Es ist daher wünschenswert, die Genauigkeit der Dosierung durch ergänzende und/oder abändernde Massnahmen zu erhöhen.

Der Erfindung liegt somit die Aufgabe zugrunde, eine Vorrichtung der eingangs genannten Gattung mit höherer Dosiergenauigkeit zu schaffen.

Die gestellte Aufgabe ist erfindungsgemäss gelöst durch eine zwischen dem Druckgefäss und dem Messwandler angeordnete Zahnradpumpe zum Fördern der Hauptkomponente auf einer Regelstrecke; durch eine elektrische Maschine, die als Motor betreibbar ist und die Zahnradpumpe für die Hauptkomponente antreibt, welche mit der ihr zugeordneten Maschine ein Stellglied bildet; durch einen elektronischen Vierquadrantenregler für die der Hauptkomponente zugeordnete elektrische Maschine und durch zwei Tachodynamos, die mit je einer der beiden elektrischen Maschinen gekoppelt sind. Die elektrische Anordnung der erfindungsgemässen Vorrichtung zeichnet sich dementsprechend dadurch aus, dass der Messwandler, gegebenenfalls über einen Messverstärker, an den Regler für die Hauptkomponente angeschlossen ist; dass die elektrische Maschine für die Hauptkomponente sowie der Regler dafür in einem elektrischen Regelkreis angeordnet sind; dass die Tachodynamos an je einen der beiden Regler angeschlossen sind und dass der Tachodynamo für die Hauptkomponente, gegebenenfalls über einen Trennverstärker oder anderen Impedanzwandler, an das Potentiometer und dieses an den Regler für die Nebenkomponente angeschlossen ist.

Damit sind zwei mechanisch und schaltungstechnisch gleich ausgestaltbare Regelungen für den Durchfluss der Haupt- bzw. Nebenkomponente vorhanden, wobei die Sollwertvorgaben einerseits von dem auf die Regelstrecke für die Hauptkomponente folgenden einzigen Messwandler und andererseits primär von dem Tachodynamo für die Hauptkomponente stammen. Infolgedessen lässt sich das festgelegte Mengenverhältnis der beiden zu mischenden Komponenten genauer als bisher einhalten, wenn sich der Förderdruck und der Durchfluss der Hauptkomponente ändert, insbesondere dann, wenn dies schnell geschieht wie am Anfang des Zerstäubens der Mischflüssigkeit.

Die erfindungsgemässe Vorrichtung ist zum Durchführen eines Verfahrens der eingangs genannten Art bestimmt und geeignet, bei welchem vorgesehen ist, dass der Durchfluss der Hauptkomponente geregelt und dabei der gemessene Durchfluss der Hauptkomponente als veränderlicher Sollwert benutzt wird und dass bei der Regelung des Durchflusses der Nebenkomponente die Regelgrösse (Istwert) des Durchflusses der Hauptkomponente zur Bestimmung des dieser Regelgrösse proportionalen Sollwertes des Durchflusses der Nebenkomponente verwendet wird.

Aus Instruments and Control Systems April 1972, Seite 9, ist ein Verfahren der eingangs genannten Art bekannt, bei dem der Durchfluss der Hauptkomponente auch geregelt und die Regelgrösse (Istwert) dieses Durchflusses zur Bestimmung des dieser proportionalen Sollwertes des Durchflusses der Nebenkomponente verwendet wird. Bei diesem bekannten Verfahren wird aber der gemessene Durchfluss der Hauptkomponente bei dessen Regelung nicht als veränderlicher Sollwert benutzt. Vielmehr wird dieser Sollwert von Hand für einen kontinuierlichen Mischvorgang grundsätzlich fest eingestellt. Folglich kann dieses Verfahren ebensowenig wie die aus «Oberfläche» und JOT bekannten Verfahren eine hohe Dosiergenauigkeit gewährleisten, wenn der Durchfluss der Hauptkomponente wegen schwankender Mengenanforderung schnell und/oder stark variiert, wie dies beim Lackieren mit einer handbetätigten Spritzpistole der Fall ist.

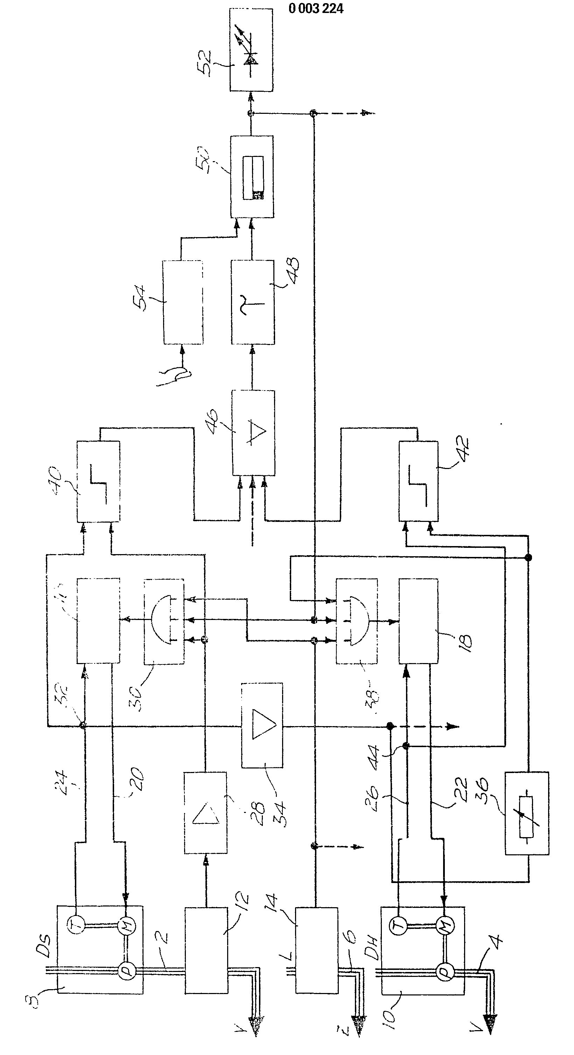

Aus der DE-OS 2 157 331 (Fig.1) ist eine «Vorrichtung zur Festsetzung und Aufrechterhaltung einer vorbestimmten Durchsatzmenge» bekannt, die in Übereinstimmung mit der erfindungsgemässen Vorrichtung eine Pumpe zum Fördern der Nebenkomponente, eine nur als Motor betreibbare, die Pumpe antreibende elektrische Maschine, ein aus Pumpe und elektrischer Maschine für die Förderung der Nebenkomponente gebildetes Stellglied und eine Voreinstellung des Mengenverhältnisses der Haupt- zur Nebenkomponente sowie eine Pumpe zum Fördern der Hauptkomponente, eine (nur) als Motor betreibbare, diese Pumpe antreibende elektrische Maschine und zwei Tachodynamos an den beiden elektrischen Maschinen aufweist. Der bekannten Vorrichtung gegenüber zeichnet sich die erfindungsgemässe durch die zwei Druckgefässe für Haupt- und Nebenkomponente, den Messwandler, die Förderung der Nebenkomponente auf einer Regelstrecke, den elektronischen Vierquadrantenregler für die der Nebenkomponente zugeordnete elektrische Maschine und das digitale Potentiometer zur Voreinstellung des Mengenverhältnisses sowie durch die Anordnung der Pumpe zum Fördern der Hauptkomponente zwischen dem Druckgefäss für diese und dem Messwandler, die Förderung der Hauptkomponente auf einer Regelstrecke, das aus Pumpe und elektrischer Maschine für die Förderung der Hauptkomponente gebildete Stellglied und einen elektronischen Vierquadrantenregler für die der Hauptkomponente zugeordnete elektrische Maschine aus.

Um ein Verfahren durchführen zu können, bei dem vorgesehen ist, dass der Soll- und der Istwert des Durchflusses der Haupt- und Nebenkomponente für jede Komponente verglichen werden und dass bei einer Überschreitung mindestens einer der zugelassenen Regelabweichungen die Sollwerte für beide Regelungen auf Null gesenkt werden, sind gemäss einer bevorzugten Ausführungsform der erfindungsgemässen Vorrichtung der Messwandler bzw. der Messverstärker und das Potentiometer über je eine UND-Schaltung an den Regler für die Haupt- bzw. Nebenkomponente und direkt je an den Sollwert-Eingang eines Komparators angeschlossen, dessen Istwert-Eingang mit dem Tachodynamo für die Haupt- bzw. Nebenkomponente verbunden ist; und ist an die beiden Komparatoren eine Antivalenzschaltung angeschlossen, welche einen bistabilen Multivibrator steuert, dessen Ausgang an je einen Eingang der beiden UND-Schaltungen angeschlossen ist. Eine Exklusives ODER-Schaltung als Antivalenzschaltung und eine Flip-Flop-Schaltung mit manuell auslösbarer Rücksetzung als Multivibrator werden dabei bevorzugt. Zweck dieser ergänzenden Massnahme ist es, die Förderung beider Komponenten sofort selbsttätig zu unterbrechen, wenn auch nur eine der an den beiden Komparatoren eingestellten und dadurch zugelassenen Regelabweichungen überschritten wird. Für diesen Fall ist bei der bekannten Vorrichtung der eingangs genannten Art lediglich eine Alarmgabe vorgesehen. Wird als Antivalenzschaltung keine Exklusives ODER-Schaltung benutzt, dann müssen die beiden an sie angeschlossenen Komparatoren Signale abgeben, deren Vorzeichen mit dem Überschreiten der zugelassenen Minimalregelabweichungen im selben Sinne wechseln.

Damit während des Einschwingvorganges in beiden Regelungen auch bei einem Überschreiten der für die Zeit nach dem Einschwingvorgang zugelassenen Minimalregelabweichungen das Fördern beider Komponenten nicht unterbrochen wird, wird bei einer bevorzugten Durchführungsweise die Absenkung beider Sollwerte auf Null erst dann vorgenommen, wenn die Überschreitung eine bestimmte Zeit lang dedauert hat, wozu bei der bevorzugten Ausführungsform zwischen die Antivalenzschaltung und den Multivibrator ein Verzögerungsglied (z.B. Laufzeitkette) eingeschaltet ist.

Um die Absenkung beider Sollwerte auf Null optisch und/oder akustisch anzeigen zu können, ist bei der bevorzugten Ausführungsform ein optischer und/oder akustischer Melder an den Multivibrator angeschlossen.

Nicht nur bei unnormal starken Regelabweichungen sollte die Förderung der beiden Komponenten durch die zwei Zahnradpumpen unterbrochen werden, die nicht wie bei dem bekannten Dosier- und Mischgerät nach Ransburg zum Fördern und Dosieren von zwei Komponentenlacken synchronisiert zu sein brauchen. Ein selbsttätiges Einstellen der Förderung beider Komponenten ist beim Zerstäuben der Mischflüssigkeit mittels Druckluft auch dann erwünscht, wenn die Druckluftzufuhr endet. Deshalb ist bei der bevorzugten Durchführungsweise vorgesehen, dass ein Abfall des Druckes der Zerstäuberluft festgestellt und infolgedessen die Sollwerte für beide Regelungen auf Null abgesenkt werden. Dementsprechend zeichnet sich die bevorzugte Ausführungsform durch einen vom Druck der Zerstäubungsluft beaufschlagten elektrischen Schalter aus, der an je einen Eingang der beiden UND-Schaltungen angeschlossen ist. Wenn umgekehrt nach einer Arbeitspause wieder Mischflüssigkeit zerstäubt werden soll und dazu sogenannte Vorluft gegeben wird, schalten die beiden UND-Schaltungen auf Durchgang, worauf die Sollwertvorgaben beide Regler wieder erreichen.

Bei der bevorzugten Ausführungsform ist als Messwandler ein Druckaufnehmer vorgesehen. Die von ihm abgegebene Analogspannung ist dem Durchfluss der Hauptkomponente proportional.

Die bevorzugte Ausführungsform zeichnet sich schliesslich dadurch aus, dass die elektrischen Maschinen als Rotoren Scheibenläufer aufweisen, die wegen ihrer geringen Masse ein verhältnismässig niedriges Trägheitsmoment besitzen, so dass das Beschleunigen und Verzögern der Rotation der Zahnradpumpen sehr schnell erfolgt.

Im folgenden ist die Erfindung anhand der durch die Zeichnung beispielhaft dargestellten, bevorzugten Ausführungsform der erfindungsgemässen Vorrichtung im einzelnen erläutert. Die einzige Figur der Zeichnung zeigt ein Blockschaltbild der Ausführungsform.

Im Ausführungsbeispiel soll eine Mischflüssigkeit aus zwei flüssigen Komponenten hergestellt werden, die in einem beliebig festlegbaren Mengenverhältnis gemischt werden. Dabei soll es sich um den Stammlack und den Härter eines 2K-Lackes handeln.

Eine Leitung 2 verbindet ein Druckgefäss $D_S$, in dem ein Vorrat an Stammlack unter Gasdruck steht, mit einer Mischkammer V, in der der Stammlack und der Härter, die getrennt zugeführt werden, gemischt werden. Eine Leitung 4 verbindet ein Druckgefäss $D_H$, in dem ein Vorrat an Härter unter Gasdruck steht, mit der Mischkammer V. Eine Leitung 6 verbindet eine Druckluftquelle L mit einem Zerstäuber Z, in dem die in der Mischkammer V hergestellte Mischflüssigkeit mittels Druckluft zerstäubt wird.

In die Stammlack-Leitung 2 und in die Härter-Leitung 4 ist je ein Dosierer 8 bzw. 10 gelegt. Der Stammlack-Dosierer 8 und der Härter-Dosierer 10 sind baugleich und weisen je eine Zahnradpumpe P auf, welche die Leitung 2 bzw. 4 unterbricht. In jedem Dosierer ist als Antrieb oder Bremse der Pumpe P eine elektrische Maschine M vorgesehen, mit der ein Tachodynamo T des Dosierers gekoppelt ist.

Die Stammlack-Leitung 2 ist zwischen dem Dosierer 8 und der Mischkammer V mit einem Druckaufnehmer 12 als Messwandler versehen. Ähnlich ist die Druckluft-Leitung 6 zwischen der Druckluftquelle L und dem Zerstäuber Z mit einem pneumatisch betätigbaren elektrischen Schalter 14 versehen.

Dem Stammlack-Dosierer 8 und dem Härter-Dosierer 10 ist ein Stammlack-Regler 16 bzw. Härter-Regler 18 zugeordnet. Beide Regler sind baugleiche elektronische Vierquadrantenregler, die über je eine elektrische Leitung 20 bzw. 22 eine Stellgrösse an die zugeordnete elektrische Maschine M abgeben und über eine Leitung 24 bzw. 26 eine Regelgrösse vom zugeordneten Tachodynamo T empfangen.

Den Sollwert erhält der Stammlack-Regler 16 vom Druckaufnehmer 12 über einen Messverstärker 28 und eine UND-Schaltung 30. Dazu ist der Ausgang des Messverstärkers 28 mit einem ersten Eingang der UND-Schaltung 30 verbunden, deren einziger Ausgang an den Sollwert-Eingang des Reglers 16 angeschlossen ist.

Seinen Sollwert erhält der Härter-Regler 18 auf folgendem Weg: Die vom Stammlack-Regler 16 empfangene Regelgrösse wird als Istwert des Durchflusses an Härter an einem Kreuzungspunkt 32 von der Leitung 24 abgenommen und über einen Trennverstärker 34 als Impedanzwandler einem beispielsweise zwanziggängigen Digital-Potentiometer 36 zugeführt, das an einen ersten Eingang einer anderen UND-Schaltung 38 den dem festgelegten Mengenverhältnis von Stammlack und Härter entsprechenden, der Regelgrösse für die Regelung des Durchflusses an Stammlack proportionalen Sollwert des Durchflusses an Härter abgibt. Der Ausgang der UND-Schaltung 38 ist mit dem Sollwert-Eingang des Härter-Reglers 18 verbunden, so dass der Sollwert bei offenem Gatter dort hingelangt.

Der Stammlack-Regler 16 und die Leitungen 20 und 24 sowie die elektrische Maschine M und der Tachodynamo T des Stammlack-Dosierers 8 bilden einen Stammlack-Regelkreis mit Sollwert-Aufgabe durch die UND-Schaltung 30. Genau entsprechend bilden der Härter-Regler 18 und die Leitungen 22 und 26 sowie die elektrische Maschine M und der Tachodynamo T des Härter-Dosierers 10 einen Härter-Regelkreis mit Sollwert-Aufgabe durch die UND-Schaltung 38.

Jedem der beiden Regelkreise ist ein die Regelgrösse, d.h. den Istwert des Durchflusses mit dessen Sollwert vergleichender Komparator 40 bzw. 42 zugeordnet. Die Istwert-Eingänge der beiden baugleichen Komparatoren 40 und 42 sind mit dem Kreuzungspunkt 32 bzw. mit einem Verzweigungspunkt 44 der Leitung 26 verbunden, während ihre Sollwert-Eingänge an den Ausgang des Messverstärkers 28 bzw. an den Ausgang des Potentiometers 36 angeschlossen sind. Jeder Komparator erzeugt dann, wenn die Regelabweichung einen einstellbaren Maximalwert überschreitet, ein Ausgangssignal. An die beiden Komparatoren 40 und 42 ist eine Antivalenzschaltung, nämlich eine Exklusives ODER-Schaltung 46, angeschlossen, die ein Ausgangssignal an ein Verzögerungsglied 48 abgibt, wenn und solange nur ein Ausgangssignal eines Komparators bei ihr eintrifft. Hat die Regelabweichung in einem der beiden Regelkreise zu lange gedauert, dann übermittelt das Verzögerungsglied 48 das Ausgangssignal der Schaltung 46 einem bistabilen Multivibrator, nämlich einer Flip-Flop-Schaltung 50, die kippt und dadurch ihr ständig sowohl an einem optischen Melder 52 mit Leuchtdiode als auch an je einem zweiten Eingang der UND-Schaltung 30 bzw. 38, also an einem Steuereingang, stehendes Ausgangssignal löscht. Infolgedessen gibt der Melder 54 Alarm und die beiden UND-Schaltungen 30 und 38 werden für den Durchgang der Sollwerte zu den Reglern 16 und 18 gesperrt. Mittels eines manuell betätigbaren Rücksetzers 54 kann die Flip-Flop-Schaltung 50 in ihren Ausgangs- und Dauerzustand zurückgekippt werden, nachdem die Betriebsstörung beseitigt ist.

Jede der beiden UND-Schaltungen 30 und 38 ist mit einem dritten Eingang als weiterem Steuereingang versehen. Beide Steuereingänge sind mit dem elektrischen Schalter 14 verbunden und sperren den Durchgang der Sollwerte zu den Reglern, wenn der Durchfluss der in der Leitung 6 geführten Zerstäubungsluft abnimmt, wie das am Ende des Zerstäubungsvorganges der Fall ist. Auch dann werden die elektrischen Maschinen M stillgesetzt, so dass jede Förderung von Stammlack und Härter plötzlich aufhört. Nach dem Einschalten von Vorluft und der Inbetriebnahme der Schaltung 50 können die Sollwerte den Reglern wieder zugeführt werden.

Die Wirkungsweise von Regelkreisen ist allgemein bekannt. Die Wirkungsweise der beschriebenen Ausführungsform, soweit sie nicht schon aus dem Obenstehenden hervorgeht, wird daher nur noch insoweit beschrieben, als sie zur Erläuterung der Erfindung erforderlich ist:

Sobald die Vorrichtung zur Versorgung der Mischkammer V und des Zerstäubers Z betriebsbereit ist und Vorluft von der Druckluftquelle L zum Zerstäuber Z strömt, sind die beiden UND-Schaltungen 30 und 38 durch die Flip-Flop-Schaltung 50 und den elektrischen Schalter 14 in der Druckluft-Leitung 6 aktiviert. Solange der Druckaufnehmer 12 jedoch keinen Sollwert liefert, weil noch kein Durchfluss in der Stammlack-Leitung 2 stattfindet, stehen beide Zahnradpumpen P still. Wenn nun aber beispielsweise an einer die Mischkammer V und den Zerstäuber Z aufweisenden Spritzpistole das auf die Mischkammer V folgende Flüssigkeitsventil geöffnet wird, drückt das Gaspolster im Druckgefäss $D_S$ Stammlack durch die Leitung 2, wobei in ihr der Druck sinkt und der Druckaufnehmer 12 dem Stammlack-Regler 16 einen ersten Sollwert liefert, der mit zunehmendem Druckabfall kontinuierlich erhöht wird. Nun setzt die Regelung im Stammlack-Regelkreis $16-20-M_8-T_8-24-16$ ein, indem die Regelabweichung der Regelgrösse (Istwert) vom wachsenden Sollwert stetig verkleinert wird, wozu die elektrische Maschine M vom elektronischen Vierquadrantenregler 16 als Motor betrieben wird, bis die Regelgrösse dem erreichten Sollwert entspricht. Einen ersten Sollwert liefert der Tachodynamo T des Stammlack-Dosierers 8 sehr schnell beim Anlaufen des Elektromotors (Grössenordnung: 10 ms).

Sobald am Kreuzungspunkt 32 der elektrischen Leitung 24 für die Regelgrösse ein erster Istwert erscheint und das Gaspolster im Druckgefäss $D_H$ Härter durch die Leitung 4 drückt, wird auch im Härter-Regelkreis $18-22-M_{10}-T_{10}-26-18$ die elektrische Maschine M des Härter-Dosierers 10 in motorischen Betrieb genommen, damit der Härter in dem gewünschten Mengenverhältnis zum Stammlack der Mischkammer V zugeführt wird. Im übrigen verhält sich der Härter-Regelkreis wie der Stammlack-Regelkreis.

Wenn an der Spritzpistole der Ausfluss der Mischflüssigkeit aus Stammlack und Härter gedrosselt wird, senkt der Druckaufnehmer 12 den Sollwert für die Stammlack-Regelung, worauf auch der Sollwert für die Härter-Regelung proportional verkleinert wird.

Ist der Spritzvorgang abgeschlossen und wird keine sogenannte Nachluft zum Reinigen von Flüssigkeitskanälen benutzt oder entfällt diese, weil eine Aussenzerstäubung stattfindet, dann bewirkt das Schliessen des Ventiles für die Zerstäuberluft eine Verkleinerung des Durchflusses in der Druckluft-Leitung 6 und damit eine pneumatische Betätigung des elektrischen Schalters 14, der die beiden UND-Schaltungen 30 und 38 passiviert, so dass die beiden Regler 16 und 18 den Sollwert Null erhalten. Infolgedessen werden die beiden elektrischen Maschinen M sofort gestoppt, so dass sich in den Leitungen 2 und 6 kein Überdruck aufbauen kann.

Falls einmal die eine oder andere Regelung ausser Kontrolle geraten sollte, passiviert die von den Komparatoren 40 und 42 sowie der Exklusives ODER-Schaltung 46 mit Verzögerungsglied 48 zum Kippen gebrachte Flip-Flop-Schaltung 50 die UND-Schaltungen 30 und 38, so dass auch dann die elektrischen Maschinen M sofort stillgesetzt werden.

Es ist möglich, die beschriebene Ausführungsform für zwei flüssige Komponenten einer Mischflüssigkeit so zu ergänzen, dass drei oder mehr Komponenten im richtigen Mengenverhältnis der Mischkammer zugeführt werden. Dazu ist es lediglich erforderlich, für jede zusätzliche Komponente einen dem Härter-Regelkreis entsprechenden Regelkreis, ein Potentiometer, eine UND-Schaltung mit einem Sollwert-Eingang und zwei Steuereingängen sowie einen Komparator vorzusehen und die Zahl der Eingänge der Exklusives ODER-Schaltung 46 um 1 zu erhöhen. Das ist in der Zeichnung durch die gestrichelten Linien angedeutet.

**Patentansprüche**

1. Vorrichtung zum automatischen Dosieren mindestens einer flüssigen Komponente einer Mischflüssigkeit, insbesondere des Härters eines 2K-Lackes mit Stammlack, mit je einem die Haupt- bzw. Nebenkomponente enthaltenden Druckgefäss ($D_S$, $D_H$) mit einem analogen Messwandler (12), der eine dem Durchfluss der Hauptkomponente verhältnisgleiche elektrische Grösse erzeugt; mit einer Zahnradpumpe ($P_{10}$) zum Fördern der Nebenkomponente auf einer Regelstrecke; mit einer elektrischen Maschine ($M_{10}$), die als Motor betreibbar ist und die Zahnradpumpe ($P_{10}$) antreibt, welche mit der elektrischen Maschine ($M_{10}$) ein Stellglied bildet; mit einem elektronischen Vierquadrantenregler (18) für die elektrische Maschine ($M_{10}$); mit einem digitalen Potentiometer (36) zum Einstellen des Mengenverhältnisses der Haupt- zur Nebenkomponente; und mit einer elektrischen Anordnung, bei welcher der Messwandler (12) an einen Regler (16) angeschlossen ist und die elektrische Maschine ($M_{10}$) für die Nebenkomponente sowie der Regler (18) dafür in einem elektrischen Regelkreis ($18$–$22$–$M_{10}$–$T_{10}$–$26$–$18$) angeordnet sind, gekennzeichnet durch eine zwischen dem Druckgefäss ($D_S$) und dem Messwandler (12) angeordnete Zahnradpumpe ($P_8$) zum Fördern der Hauptkomponente auf einer Regelstrecke; durch eine elektrische Maschine ($M_8$), die als Motor betreibbar ist und die Zahnradpumpe ($P_8$) für die Hauptkomponente antreibt, welche mit der ihr zugeordneten Maschine ($M_8$) ein Stellglied bildet; durch einen elektronischen Vierquadrantenregler (16) für die der Hauptkomponente zugeordnete elektrische Maschine ($M_8$); durch zwei Tachodynamos ($T_8$, $T_{10}$), die mit je einer der beiden elektrischen Maschinen ($M_8$, $M_{10}$) gekoppelt sind; und dadurch, dass der Messwandler (12), gegebenenfalls über einen Messverstärker (28), an den Regler (16) für die Hauptkomponente angeschlossen ist; dass die elektrische Maschine ($M_8$) für die Hauptkomponente sowie der Regler (16) dafür in einem elektrischen Regelkreis ($16$–$20$–$M_8$–$T_8$–$24$–$16$) angeordnet sind; dass die Tachodynamos ($T_8$, $T_{10}$) an je einen der beiden Regler (16, 18) angeschlossen sind und dass der Tachodynamo ($T_8$) für die Hauptkomponente, gegebenenfalls über einen Trennverstärker (34) oder anderen Impedanzwandler, an das Potentiometer (36) und dieses an den Regler (18) für die Nebenkomponente angeschlossen ist.

2. Vorrichtung nach Anspruch 1, dadurch gekennzeichnet, dass der Messwandler (12) bzw. der Messverstärker (28) und das Potentiometer (36) über je eine UND-Schaltung (30, 38) an den Regler (16 bzw. 18) für die Haupt- bzw. Nebenkomponente und direkt je an den Sollwert-Eingang eines Komparators (40 bzw. 42) angeschlossen sind, dessen Istwert-Eingang mit dem Tachodynamo ($T_8$ bzw. $T_{10}$) für die Haupt- bzw. Nebenkomponente verbunden ist; dass an die beiden Komparatoren (40, 42) eine Antivalenzschaltung (46) angeschlossen ist, welche einen bistabilen Multivibrator (50) steuert, dessen Ausgang an je einen Eingang der beiden UND-Schaltungen (30, 38) angeschlossen ist.

3. Vorrichtung nach Anspruch 2, gekennzeichnet durch eine Exklusives ODER-Schaltung (46) als Antivalenzschaltung und durch eine Flip-Flop-Schaltung (50) mit manuell auslösbarer Rücksetzung (54) als Multivibrator.

4. Vorrichtung nach Anspruch 2 oder 3, dadurch gekennzeichnet, dass zwischen die Antivalenzschaltung (46) und den Multivibrator (50) ein Verzögerungsglied (48) eingeschaltet ist.

5. Vorrichtung nach einem der Ansprüche 2 bis 4, dadurch gekennzeichnet, dass an den Multivibrator (50) ein optischer und/oder akustischer Melder (52) angeschlossen ist.

6. Vorrichtung nach einem der Ansprüche 2 bis 5, gekennzeichnet durch einen vom Druck der Zerstäubungsluft beaufschlagten elektrischen Schalter (14), der an je einen Eingang der beiden UND-Schaltungen (30, 38) angeschlossen ist.

7. Vorrichtung nach einem der Ansprüche 1 bis 6, dadurch gekennzeichnet, dass der Messwandler ein Druckaufnehmer (12) ist.

8. Vorrichtung nach einem der Ansprüche 1 bis 7, dadurch gekennzeichnet, dass die elektrischen Maschinen ($M_8$, $M_{10}$) als Rotoren Scheibenläufer aufweisen.

**Claims**

1. Device for the automatic dispensing of at least one liquid component of a mixed liquid, particularly the hardener of a two component paint comprising stock paint, with pressure vessels ($D_S$, $D_H$) containing the main and subsidiary components respectively, and comprising an analogue instrument transformer (12) which generates an electrical value proportionate to the throughflow of the main component; and comprising a geared pump ($P_{10}$) for delivering the secondary component over a controlled process and comprising an electrtical power unit ($M_{10}$) which can be operated as a motor and which drives the geared pump ($P_{10}$) which forms a positioning element together with the electrical machine ($M_{10}$), and comprising an electronic four quadrant controller (18) for the electrical machine ($M_{10}$) and with a digital potentiometer (36) for adjusting the quantity proportions of main to subsidiary component and with an electrical arrangement wherein the instrument transformer (12) is connected to a controller (16) and the electrical machine ($M_{10}$) for the subsidiary component and the controller (18) therefor are disposed in an electrical control circuit ($18$–$22$–$M_{10}$–$T_{10}$–$26$–$18$), characterised by, disposed between the pressure vessel ($D_S$) and the instrument transformer (12), a geared pump ($P_8$) for delivering the main component over a controlled process; by an electrical machine ($M_8$) which can be operated as a motor and which drives the geared pump ($P_8$) for the main component and which forms a positioning element with the machine ($M_8$) associated with it; by an electronic four quadrant controller (16) for the electrical machine ($M_8$) associated with the main component; by two tacho dynamos ($T_8$, $T_{10}$) each of which is coupled to one of the two electrical machines ($M_8$, $M_{10}$), and in that the instrument transformer (12) is connected to the controller (16) for the main component, possibly via a measuring amplifier (28) and in that the electrical machine ($M_8$) for the main component and the controller (16) for it are disposed in an electrical control circuit (16–20–$M_8$–$T_8$–24–16) and in that the tacho dynamos ($T_8$, $T_{10}$) are each connected to one of the two controllers (16, 18) and in that the tacho dynamo ($T_8$) for the main component is connected possibly via an isolating amplifier (34) or another impedance converter, to the potentiometer (36) and in that this is connected to the controller (18) for the subsidiary component.

2. Device according to Claim 1, characterised in that the instrument transformer (12) or measuring amplifier (28) and the potentiometer (36) are each connected through an AND circuit (30, 38) to the controller (16 or 18) for the main or subsidiary components respectively and directly to the respective desired value input of a comparator (40, 42), the actual value input of which is connected to the tacho dynamo ($T_8$ or $T_{10}$) for the main or subsidiary component and in that connected to the two comparators (40, 42) is an antivalence circuit (46) which controls a bistable multi-vibrator (50), the output of which is connected to an input of each of the two AND circuits (30, 38).

3. Device according to Claim 2, characterised by an exclusive OR circuit (46) as an antivalence circuit and by a flip-flop circuit (50) having a manually releasable reset (54) to serve as the multi-vibrator.

4. Device according to Claim 2 or 3, characterised in that a delay element (48) is incorporated between the antivalence circuit (46) and the multivibrator (50).

5. Device according to one of Claims 2 to 4, characterised in that an optical and/or acoustic repeater (52) is connected to the multivibrator (50).

6. Device according to one of Claims 2 to 5, characterised by, subject to the pressure of the atomising air, an electrical switch (14) which is connected to one input on each of the two AND circuits (30, 38).

7. Device according to one of Claims 1 to 6, characterised in that the instrument transformer is a pressure receiver (12).

8. Device according to one of Claims 1 to 7, characterised in that the electrical machines ($M_8$, $M_{10}$) have disc rotors.

**Revendications**

1. Dispositif pour le dosage automatique d'au moins un composant liquide d'un mélange liquide, en particulier de l'agent de durcissement d'un vernis à deux composants avec vernis de base, avec chaque fois un récipient sous pression ($D_S$, $D_H$) contenant les composants principal, respectivement secondaire, avec un transducteur analogique (12) qui engendre une grandeur électrique proportionnelle au débit du composant principal; avec une pompe à engrenage ($P_{10}$) pour l'acheminement du composant secondaire sur une voie de réglage; avec une machine électrique ($M_{10}$) qui peut être mise en œuvre comme moteur et qui entraîne la pompe à engrenage ($P_{10}$), laquelle forme avec la machine électrique ($M_{10}$) un organe de réglage; avec un régulateur électronique à quatre quadrants (18) pour la machine électrique ($M_{10}$); avec un potentiomètre numérique (36) pour le réglage du rapport quantitatif du composant principal au composant secondaire et avec un agencement électrique, dans lequel le transducteur (12) est raccordé à un régulateur (16) et où la machine électrique ($M_{10}$) pour le composant secondaire, ainsi que le régulateur (18) pour celle-ci sont disposés dans un circuit de réglage électrique (18–22–$M_{10}$–$T_{10}$–26–18), caractérisé par une pompe à engrenage ($P_8$) disposée entre le récipient sous pression ($D_S$) et le transducteur (12), pour le transport du composant principal sur une voie de réglage; par une machine électrique ($M_8$) qui peut être mise en œuvre comme moteur et qui entraîne la pompe à engrenage ($P_8$) pour le composant principal, laquelle forme avec la machine ($M_8$) qui lui est associée, un organe de réglage; par un régulateur électronique à quatre quadrants (16) pour la machine électrique ($M_8$) associée au composant principal; par deux dynamos tachymétriques ($T_8$, $T_{10}$) qui sont accouplées chaque fois à une des deux machines électriques ($M_8$, $M_{10}$); et par le fait que le transducteur (12) est relié, éventuellement par l'intermédiaire d'un amplificateur de mesure (28), au régulateur (16) pour le composant principal; que la machine électrique ($M_8$) pour le composant principal ainsi que le régulateur (16) pour celle-ci sont disposés en un circuit de réglage électrique (16–20–$M_8$–$T_8$–24–16); que les dynamos tachymétriques ($T_8$, $T_{10}$) sont raccordées chaque fois à l'un des deux régulateurs (16, 18) et que la dynamo tachymétrique ($T_8$) pour le composant principal est raccordée, éventuellement par l'intermédiaire d'un amplificateur séparateur (34) ou par un autre adaptateur d'impédance, au potentiomètre (36), et celui-ci au régulateur (18) pour le composant secondaire.

2. Dispositif suivant la revendication 1, caractérisé en ce que le transducteur (12), respectivement l'amplificateur de mesure (28) et le potentiomètre (36) sont raccordés par l'intermédiaire de chaque fois un circuit ET (30, 38) au régulateur (16, respectivement 18) pour le composant principal, respectivement le composant secondaire, et directement chaque fois à l'entrée de valeur de consigne d'un comparateur (40, respectivement 42), dont l'entrée de valeur réelle est reliée à la dynamo tachymétrique ($T_8$, respectivement $T_{10}$) pour le composant principal, respectivement le composant secondaire; qu'aux deux comparateurs (40, 42) est raccordé un circuit antivalence (46), qui commande un multivibrateur bistable (50) dont la sortie est raccordée chaque fois à une entrée de deux circuit ET (30, 38).

3. Dispositif suivant la revendication 2, caractérisé par un circuit OU exclusif (46) comme circuit antivalence et par un circuit basculeur (50), avec rétablissement déclenchable à la main (54) comme multivibrateur.

4. Dispositif suivant la revendication 2 ou la revendication 3, caractérisé en ce qu'entre le circuit antivalence (46) et le multivibrateur (50) est intercalé un organe de retard (48).

5. Dispositif suivant une des revendications 2 à 4, caractérisé en ce qu'au multivibrateur (50) est raccordé un avertisseur optique et/ou acoustique (52).

6. Dispositif suivant une des revendications 2 à 5, caractérisé par un commutateur électrique (14) sollicité par la pression de l'air de pulvérisation, qui est raccordé chaque fois à une entrée de deux circuits ET (30, 38).

7. Dispositif suivant une des revendications 1 à 6, caractérisé en ce que le transducteur est un capteur de pression (12).

8. Dispositif suivant une des revendications 1 à 7, caractérisé en ce que les machines électriques $(M_8, M_{10})$ présentent comme rotors des rotors à disques.

0 003 224